Europäisches Patentamt

European Patent Office

Office européen des brevets

(19)

(11) Numéro de publication: **0 099 296**
**A2**

(12) # DEMANDE DE BREVET EUROPEEN

(21) Numéro de dépôt: 83401412.8

(22) Date de dépôt: 07.07.83

(51) Int. Cl.³: **A 23 J 3/00**
**A 23 C 19/00, A 23 C 21/00**

(30) Priorité: 9.07.82 FR 8212123

(43) Date de publication de la demande:
25.01.84 Bulletin 84/4

(84) Etats contractants désignés:
AT BE CH DE GB IT LI LU NL SE

(71) Demandeur: Pannetier, Jean
route de Vivonne St.-Maurice la Clouère
F-86160 Gencay(FR)

(72) Inventeur: Pannetier, Jean
route de Vivonne St.-Maurice la Clouère
F-86160 Gencay(FR)

(74) Mandataire: Phélip, Bruno et al,
c/o Cabinet Harlé & Phélip 21, rue de la Rochefoucauld
F-75009 Paris(FR)

(54) Procédé pour la récupération des protéines du lactosérum, installation pour sa mise en oeuvre et applications, notamment à la production fromagère.

(57) L'installation comprend un dispositif (14,15) de chambrage dynamique disposé après l'appareil de chauffage (7), une unité (22) de chambrage statique disposée aussitôt après les moyens (20) d'ajustement du pH et au-dessus de l'ensemble de filtration (34) et un récipient (33) recevant par gravité le produit soutiré dans l'unité (22) de chambrage statique, ledit récipient (33) étant disposé au-dessous de ladite unité (22) dans une position adjacente à l'ensemble de filtration (34). On obtient un lait de protéines sériques, lesquelles se trouvent à l'état coagulé. Ce lait peut être ajouté au lait du fabrication destiné à la production fromagère.

EP 0 099 296 A2

1

La présente invention concerne le domaine de la technique laitière. Elle a plus particulièrement pour objet un procédé perfectionné pour la récupération des protéines contenues dans le lactosérum. L'invention concerne également une installation pour la mise en oeuvre d'un tel procédé ainsi que les applications de celui-ci, notamment à l'obtention d'un produit davantage concentré en protéines sériques que le lactosérum de départ et pouvant trouver utilisation dans la production fromagère.

Il existe de nombreux procédés et une littérature abondante au sujet de la récupération des protéines dites solubles dans le lactosérum de fromagerie. Les techniques les plus simples consistent à effectuer la floculation de ces protéines par des traitements thermiques et/ou acides, suivis d'une filtration, ce qui permet de séparer les protéines à l'état floculé. Dans le cas d'un traitement thermique, le rendement du procédé est fonction de la température, la quantité de protéines récupérée étant d'autant plus élevée que la température approche de 100 °C. Ce traitement thermique est fréquemment combiné à une acidification, par exemple à l'acide chlorhydrique, ou avec d'autres acides acceptables sur le plan alimentaire. Les techniques sont simples mais donnent lieu cependant à des difficultés lors de la séparation consécutive des protéines qui peut se faire soit par filtration, soit par centrifugation. Les dépenses en énergie sont importantes et les investissements excessifs.

Parmi les procédés récents, on peut également citer l'ultrafiltration qui permet de récupérer les protéines du lactosérum à l'état non dénaturé. En d'autres termes les protéines sériques sont récupérées à l'état soluble. Sur le plan technologique, l'ultrafiltration est une technique douce mais coûteuse. Dans la pratique il faut utiliser des membranes possédant à la fois une durée de vie suffisante et capables d'être nettoyées sans subir de détérioration. De plus, les équipements d'ultrafiltration sont coûteux.

Parmi les procédés connus, on peut également citer le procédé dénommé CENTRI-WHEY développé par la Société ALFA LAVAL, qui consiste à floculer les protéines du sérum et, après les avoir séparées par centrifugation, à incorporer ces protéines floculées dans le lait des fabrications suivantes de fromage. Les protéines du sérum sont coagulées par la chaleur et sont présentes sous forme d'une suspension suffisamment stable pour ne pas déposer durant l'empresurage. Un tel procédé conduit à un concentré protéique de lait dans lequel les protéines sériques se trouvent à l'état floculé. Le lait de protéines résultant de la floculation des protéines du sérum est incorporé au lait de fabrication, ce qui donne lieu à une nouvelle synérèse lors de la production fromagère proprement dite. Sur le plan diététique on estime qu'il n'y a aucun inconvénient et dans bien des cas plutôt avantage à consommer les protéines sériques à l'état coagulé plutôt qu'à l'état soluble. Pour intéressant qu'il soit au point de vue diététique aussi bien qu'économique, le procédé CENTRI-WHEY entraîne cependant des dépenses importantes que ce soit au niveau des investissements ou de la consommation en énergie. Les installations pour la mise en oeuvre d'un tel procédé sont donc coûteuses.

L'invention a pour objet un procédé permettant de valoriser les protéines du sérum, notamment dans le cadre de la production fromagère. Ainsi, l'invention concerne plus spécialement l'obtention d'un lait de protéines de sérum, facilement utilisable en fromagerie. Le procédé de l'invention peut être mis en oeuvre à un coût très limité pour un investissement réduit. Le lait de protéines est stable et ces dernières conservent leurs propriétés hydrophiles.

Sous sa forme générale, l'invention concerne un procédé pour la récupération des protéines contenues dans le lactosérum, par traitement thermique et/ou acidification de celui-ci, puis séparation des protéines floculées, ledit procédé étant caractérisé en ce que, après le traitement thermique, on réalise un chambrage dans des conditions dynamiques ayant pour fonction de dénaturer les protéines en différant la formation d'un floculat, en ce que , à la suite de ce chambrage, on traite de manière connue le sérum pour lui conférer un pH acide afin de former des flocons, en ce qu'on réalise sur ce sérum un chambrage dans des conditions statiques dans lesquelles les flocons ne sont pratiquement pas mis en mouvement, en ce que, après ce chambrage statique, on fait écouler en continu sous l'effet de la gravité le sérum floculé jusque dans une zone de réception où les flocons conservent sensiblement leur intégrité et de laquelle s'écoule le sérum floculé dans des conditions douces jusqu'à une zone de filtration en continu à partir de laquelle on sépare un produit concentré en protéines sériques et un liquide de filtration appauvri en protéines.

Le procédé de l'invention est applicable à tous les sérums, acides ou doux, quelle que soit la femelle laitière d'origine : vache, chèvre, brebis, bufflesse et analogues. En vue d'assurer une fabrication homogène, le pH du sérum de départ est ajusté par des moyens connus pour se situer dans la gamme d'environ 4,5 à 11. Les valeurs de pH se situent entre 5,4 et 5,6 ou entre 6,2 à 6,9 ou entre 7 et 9,2 selon l'origine du sérum et ses caractéristiques propres. Compte-tenu du caractère généralement acide du sérum, il convient, en vue de l'ajustement du pH, de lui ajouter un composé basique tel qu'un carbonate ou hydroxyde alcalin ou alcalino-terreux. L'hydroxyde de sodium est très largement préféré, par exemple sous forme d'une solution aqueuse à 20% en poids.

Le sérum dont le pH a été ainsi ajusté subit alors un chamffage destiné à permettre une floculation ultérieure. Ce chauffage est effectué d'une manière connue, mais selon l'invention, il doit être réalisé dans des conditions ménagées et contrôlées. En effet il faut éviter toute élévation de température excessive pour ne pas floculer les protéines du sérum à ce stade du procédé. De plus, l'élévation de température ne doit pas, pour certaines applications, avoir pour effet de modifier la texture des protéines, par exemple en les durcissant pour conduire à des granules de protéines dont l'utilisation ne serait pas souhaité pour certains types de production fromagère. Il est connu que si l'on élève la température on augmente le taux de récupération des protéines du sérum. Au fur et à mesure de l'élévation de température la structure des protéines devient de plus en plus dure et "sèche", ce qui peut être acceptable dans certains types de fromage mais peu recommandé dans d'autres. Pour donner des exemples, on sait qu'à environ 72°C on obtient un rendement d'environ 50% de dénaturation des protéines sériques. A 95°C le rendement passe à 85% de dénaturation mais on constate une modification de la texture des protéines. La règle générale, selon l'invention, est que l'élévation de température ne doit pas entraîner de floculation. Selon l'utilisation envisagée pour le concentré protéique obtenu à l'issue du procédé, la température peut varier entre 72 et 98°C environ, la gamme préférée se situant entre 80 et 85°C.

Selon une caractéristique importante de l'invention, le sérum ayant subi le traitement thermique de chauffage subit un chambrage dans des conditions dynamiques ayant pour fonction d'assurer que les protéines deviennent insolubles mais cependant en différant la formation d'un floculat. Autrement dit, dans ce stade du procédé il n'y a pas encore formation de flocons. Le chambrage dans des conditions dynamiques implique un temps de séjour de l'ordre de 10 à 30 minutes et par exemple 20 minutes dans une zone dans laquelle le sérum est soumis à une circulation guidée propre à assurer à la fois le mouvement dynamique et l'homogénéisation du produit. Il va sans dire qu'un tel chambrage dynamique peut être réalisé en continu, d'autant que le procédé de l'invention est mis en oeuvre d'une manière avantageuse en continu.

Après avoir subi le chambrage dynamique, le sérum est ensuite traité de manière connue pour lui conférer un pH acide provoquant la formation d'un floculat. La plage de pH à réaliser se situe entre 4,2 et 6,6 environ, de préférence entre 5,4 et 5,6 environ. On peut utiliser à cet effet toutes sortes d'acides inorganiques ou organiques, de préférence ceux tolérés sur le plan alimentaire. Le plus répandu est l'acide chlorhydrique par exemple sous forme d'une solution à 20% en poids. On peut également faire appel à l'acide nitrique. Parmi les acides organiques, on peut citer l'acide lactique. L'effet de l'addition d'acide est de provoquer la

5

formation de flocons dans le sérum ayant subi le traitement thermique alable. Selon une caractéristique très importante de l'invention, toutes les étapes consécutives sont conçues pour conserver l'intégrité des flocons jusque la filtration.

Le sérum floculé subit d'abord un chambrage statique, c'est-à-dire qu'il demeure pendant une période de 5 à 30 minutes, par exemple de 10 à 15 minutes, dans une zone dans laquelle les flocons ne sont pratiquement pas mis en mouvement. Dans une telle zone il se forme en effet de gros flocons mais ceux-ci sont fragiles. Pour une mise en oeuvre continue, cette zone de chambrage statique peut comprendre une batterie de récipients qui sont alternativement utilisés pour recevoir le sérum acidifié.

Après le chambrage statique, on fait couler en continu sous l'effet de la simple gravité le sérum floculé jusque dans une zone de réception où les flocons conservent sensiblement leur intégrité et de laquelle le sérum floculé s'écoule dans des conditions douces jusqu'à la zone de filtration. Il est important que l'écoulement à partir de la zone de chambrage se fasse par gravité. En effet, une circulation par pompage aurait pour effet de détruire les flocons formés au cours du chambrage. La zone de chambrage statique se trouve donc sensiblement au-dessus de la zone de réception précitée et de la zone de filtration qui lui est adjacente. La zone de réception peut être constituée d'une simple colonne à partir de laquelle le sérum floculé s'écoule par débordement jusque dans la zone de filtration. On assure ainsi l'alimentation de la zone de filtration dans des conditions douces pour limiter les mouvements à l'intérieur du liquide qui auraient pour effet de détruire les flocons.

Dans la zone de filtration, qui fonctionne en continu, on sépare un produit concentré en protéines sériques et un liquide de filtration appauvri en protéines. On préfère que dans la zone de filtration le sérum floculé forme un lit qui se dépose sur le filtre et peut être évacué sous forme d'un gâteau de filtration. Le liquide de filtration est un sérum appauvri en protéines qui peut être avantageusement recyclé, car,

6

étant chaud, il peut permettre de réchauffer le sérum de départ dans un échangeur.

Le procédé de l'invention permet de récupérer industriellement 55 à 85% des protéines du sérum, dans la pratique par exemple 70% environ. On obtient un lait de protéines sériques titrant 20 à 50 grammes/litre de protéines, par exemple 30 à 32 grammes/litre, ce qui est à comparer avec la teneur en protéines du sérum de départ qui contient 5 à 6 grammes/litre de protéines solubles. Un tel enrichissement est bien compatible avec l'industrie fromagère. En effet un tel lait de protéines peut être additionné au lait de fabrication en vue d'une production fromagère ultérieure.

A cet effet, le lait de protéines obtenu à l'issue du procédé de l'invention peut être refroidi puis subir un traitement d'homogénéisation ou de lissage avant d'être introduit dans la fabrication fromagère proprement dite. Un tel lait peut se substituer aux protéines du lait écrémé dans une proportion correspondante à la teneur en protéines que l'on désire finalement dans le fromage. Le concentré en protéines de l'invention convient à la production de tous types de fromage : pâte fraîche, pâte molle, pâte pressée, pâte cuite, fromage fondu et analogues.

Bien entendu, si le concentré protéique obtenu par le procédé de l'invention, convient le plus avantageusement pour être utilisé ultérieurement dans la technique fromagère, les applications d'un tel produit ne sont cependant pas limitées à cette utilisation. Les protéines sériques représentent en effet en tant que telles un produit de valeur sur le plan nutritionnel. Elles ont des applications connues multiples dans le domaine diététique et alimentaire. Toutes ces applications sont bien connues de l'homme de l'art et n'ont pas besoin d'être décrites plus en détail.

On a dit précédemment qu'il était important, selon l'invention, de contrôler soigneusement les conditions dans lesquelles se formait le floculat de protéines en vue de permettre sa filtration. L'invention prévoit à cet effet d'adapter les paramètres des opérations connues du traitement thermique préalable et de l'acidification de manière à éviter

7

des amas de flocons, pour ne former que des flocons individualisés dont l'intégrité est maintenue jusqu'à la filtration. Il est préférable que la température de chauffage du sérum de départ ne soit pas trop élevée et on a constaté que la plage de température préférée se situait entre 80 et 85°C dès lors que le produit était destiné à servir de lait pour la fabrication fromagère. Il faut également contrôler l'influence du pH lors de l'addition d'acide. Des pH excessivement acides conduisent en effet à des formations d'un floculat trop sec, de sorte qu'en règle générale il n'est pas souhaitable de descendre en dessous de pH 4. En combinant les paramètres de température et de pH acide avec les conditions de transport du sérum floculé jusqu'à la zone de filtration,on assure une séparation optimale du concentré en protéines.

L'invention a également pour objet une installation pour la mise en oeuvre du procédé décrit ci-dessus, ladite installation comprenant un appareil pour le chauffage du sérum de départ, des moyens d'ajustement du pH avant et après chauffage du sérum et un ensemble de filtration, ladite installation étant caractérisée en ce qu'elle comprend un dispositif de chambrage dynamique disposé après l'appareil de chauffage, une unité de chambrage statique disposée aussitôt après les moyens d'ajustement du pH et au-dessus de l'ensemble de filtration, et un récipient recevant par gravité le produit soutiré dans l'unité de chambrage statique, ledit récipient étant disposé au-dessous de ladite unité dans une position adjacente à l'ensemble de filtration.

L'installation comprend aussi des moyens destinés à l'ajustement du pH du sérum avant son passage dans l'appareil de chauffage, lesdits moyens consistant essentiellement en des moyens d'addition basique.

L'appareil pour le chauffage du sérum est de type quelconque connu, par exemple un échangeur à plaques.

8

A la sortie de l'appareil de chauffage proprement dit et avant le dispositif de chambrage dynamique, on peut également prévoir des moyens destinés à assurer une injection complémentaire de vapeur pour augmenter encore la température si nécessaire.

L'installation selon l'invention comprend un dispositif de chambrage dynamique interposé entre l'appareil de chauffage et les moyens d'addition d'acide . Dans une forme de réalisation préférée, un tel dispositif comporte au moins une cuve verticale dans laquelle est monté un organe axial fixe destiné à assurer une circulation guidée du sérum. Avantageusement cet organe axial est une vis hélicoïdale. Les parois latérales peuvent comporter aussi des déflecteurs permettant d'homogénéiser le sérum en cours de circulation. L'installation peut ainsi comprendre plusieurs dispositifs, par exemple deux dispositifs de chambrage dynamique, montés en série.

L'installation selon l'invention comprend également une unité de chambrage statique disposée, sur le trajet du sérum, après les moyens d'ajustement du pH . La particularité essentielle de cette unité est d'être disposée généralement au-dessus de l'ensemble de filtration, de manière que le produit soutiré dans l'unité de chambrage statique parvienne par gravité dans un récipient se trouvant dans une position adjacente à l'ensemble de filtration.

Les moyens d'addition d'acide  sont connus de l'homme de l'art et n'ont pas besoin d'être décrits en détail. Ils peuvent consister simplement en une cuve recevant l'acide et en une pompe doseuse destinée à introduire l'acide dans le sérum sortant du dispositif de chambrage dynamique.

L'unité de chambrage statique comprend avantageusement une batterie de cuves,en particulier de trois cuves. La première cuve reçoit le sérum acidifié, le chambrage statique proprement dit a lieu dans la deuxième cuve et la troisième cuve se vide dans le récipient placé à côté de l'ensemble de filtration. Des vannes commandées par un programmateur permettent . de changer la fonction de ces cuves. Les cuves ont une forme avantageusement tronconique  pour permettre une vidange totale.

Le récipient disposé à côté de l'ensemble de filtration peut consister en une simple colonne alimentée à sa partie inférieure par le sérum floculé provenant de l'unité de chambrage statique. Le sérum floculé sort alors par débordement à la partie supérieure du récipient pour alimenter dans des conditions douces l'ensemble de filtration.

L'ensemble de filtration mis en oeuvre dans l'installation selon l'invention peut être de conception connue et même consister en une centrifugeuse. Cependant, dans une forme de réalisation qui est hautement préférée l'ensemble de filtration comprend une bande filtrante se déplaçant en continu sur deux tambours d'extrémité, ladite bande comportant deux bords latéraux élastiques dirigés vers le haut. Le sérum floculé provenant du récipient adjacent, s'écoule doucement sur le brin supérieur de la bande de filtration en formant un lit de filtration. La toile de filtration présente notamment une dimension de mailles comprise entre 30 et 100 microns. Du côté du brin inférieur et à l'intérieur de la bande de filtration est prévu un groupe de buses à air comprimé soufflant de l'air de l'intérieur vers l'extérieur pour décolmater en totalité le brin portant encore des morceaux de gâteau de filtration. Ces morceaux ainsi que la plus grande partie déjà séparée du floculat sont récupérés sous forme d'un liquide constituant un lait de protéines de sérum. Après le groupe de buses à air comprimé, on prévoit une rampe d'eau de lavage qui dirige des jets d'eau de l'intérieur vers l'extérieur de la bande et permet de nettoyer complètement celle-ci avant son passage sous forme de brin supérieur. En fin, dans la zone entourant le point bas du brin supérieur est prévue une goulotte de récupération du sérum appauvri en protéines. Ce sérum chaud peut être recyclé pour le réchauffage du sérum de départ.

Ainsi dans une forme de réalisation, l'appareil de chauffage du sérum de l'installation selon l'invention comprend une première section qui constitue une section d'échange entre le sérum d'alimentation et le sérum

0099296

10

déprotéiné provenant de l'ensemble de filtration puis une seconde section qui constitue la section de chauffage proprement dite.

On notera que l'installation selon l'invention comprend aussi un certain nombre d'appareils annexes bien connus de l'homme de l'art tels que régulateur de débit, régulateur de pH, pompes de reprise et autres moyens analogues.

L'homme de l'art comprendra à l'aide de la description qui précède que l'installation selon l'invention ne nécessite pas d'investissement coûteux, contrairement par exemple aux installations faisant appel aux équipements d'ultrafiltration. En outre l'installation selon l'invention ne comprend que des appareils simples ne nécessitant qu'une dépense très limitée en énergie, contrairement au procédé connu du type CENTRI-WHEY. On peut estimer que l'invention entraîne des investissements sept à dix fois moindres que les installations actuellement connues.

L'invention sera encore illustrée en référence aux dessins annexés qui représentent schématiquement une installation capable de traiter 5000 l/h de sérum.

Le sérum à traiter, doux ou acide, arrive dans l'installation par la ligne 1. Il est introduit dans un bac 2 muni d'un flotteur 3 destiné à régulariser le débit d'alimentation en sérum. A la sortie du bac 2, le sérum est repris par une pompe 4 et transporté dans une ligne 5. En 6 est réalisée une injection d'une solution aqueuse à 20% d'hydroxyde de sodium destinée à ajuster le pH. Le sérum à traiter passe ensuite dans un appareil 7 dans lequel il est réchauffé. L'appareil 7 comprend une première section 8 au sein de laquelle le sérum échange de la chaleur avec le liquide de filtration (voir ci-après) qui est transporté dans la ligne 10. A la sortie de cette ligne 10 on récupère un sérum appauvri en protéines et refroidi. L'appareil 7 comporte ensuite une section 9 de chauffage dans laquelle le sérum à traiter est mis en échange avec un fluide chauffant 11. Ce fluide peut être de la vapeur ou de l'eau chaude. Le sérum porté à une température de 80 à 85°C sort de l'appareil 7 par la ligne 13. Il peut éventuellement recevoir en 12 une injection additionnelle de vapeur pour augmenter sa température.

Le sérum réchauffé transporté dans la ligne 13, dans lequel les protéines ne sont pas floculées, parvient ensuite dans un dispositif de chambrage dynamique comportant deux appareils 14, 15 montés en série. Chaque appareil 14, 15 est du type comportant une vis hélicoïdale centrale respectivement 17, 18. En outre des purges 14a, 15a sont prévues à la partie supérieure de chacun des appareils 14, 15. Le sérum véhiculé dans la ligne 13 parvient à la partie inférieure du premier appareil 14 et circule ensuite de bas en haut dans celui-ci en étant guidé le long de la vis 17. On peut prévoir complémentairement des déflecteurs latéraux (non représentés) pour homogénéiser le sérum en circulation. De la partie supérieure de l'appareil 14 le sérum passe dans la ligne 16 pour parvenir à la partie inférieure de l'appareil 15 où de nouveau il subit un chambrage dynamique au cours duquel il circule de bas en haut le long de la vis 18. Ce chambrage dynamique a pour effet d'assurer que les protéines du sérum s'insolubilisent mais il n'y a pas encore formation de flocons au sein de celui-ci.

A la sortie 19 du dispositif de chambrage dynamique le sérum reçoit une injection en 20 d'acide chlorhydrique en solution aqueuse à 20%. Cette addition d'acide a pour effet de réaliser de manière connue la floculation des protéines sériques. Le sérum acidifié est ensuite introduit dans une unité de chambrage statique qui dans l'exemple représenté comporte trois cuves 23 ,24, 25. Chaque cuve est profilée de manière à assurer un vidage complet de son contenu et à cet effet la forme habituelle est celle d'un tronc de cône. Dans l'exemple choisi, chaque cuve a une contenance d'environ 800 litres. Les cuves 23, 24, 25 sont équipées respectivement de couvercles 29, 30, 31 avec un système de nettoyage. A la partie inférieure de l'unité de chambrage statique on trouve un système de canalisations, 32 servant à l'alimentation et à l'évacuation des cuves avec également un système de vannes 26, 27, 28 dont la mise en action est commandée par un programmateur. Dans l'exemple choisi la cuve 24 est celle dans laquelle est réalisé le chambrage, le sérum acidifié étant transporté dans la ligne 21 et circulant pratiquement sans mouvement de bas en haut (flèche f1), la cuve 23 est en cours de remplissage tandis que la cuve 25 se vide (flèche f2). Grâce à cette batterie de trois cuves 23, 24, 25 constituant l'unité 22 de chambrage statique, on peut réaliser d'une manière continue le chambrage du sérum floculé.

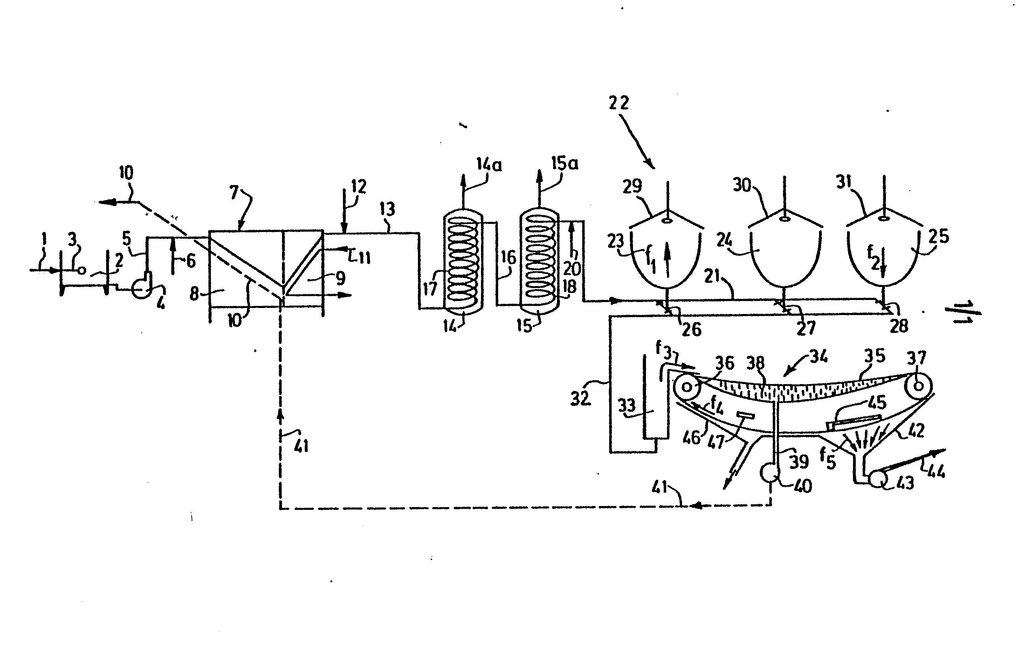

L'ensemble de filtration se trouve en dessous de l'unité 22 de chambrage statique, de manière que l'écoulement dans la ligne 32 se fasse par simple gravité. Le sérum floculé parvient ainsi à la partie inférieure d'une colonne 33. Le contenu de celle-ci s'écoule à sa partie supérieure (flèche f3) par simple débordement sur l'ensemble de filtration proprement dit. Cet ensemble qui est désigné par la référence générale 34 comprend une toile filtrante 35 circulant sur deux tambours d'extrémité 36, 37. La bande présente des bords latéraux relevés non apparents sur le dessin, de contexture élastique afin de permettre le passage de la bande autour des tambours. La toile filtrante a une dimension de maille de l'ordre de 30 à 100 microns. Le floculé déversé de la colonne 33 se dépose sous forme d'un lit de filtration 38. Le liquide appauvri en protéines est évacué par la conduite 39 et peut être repris par la pompe 40 pour être transporté dans la conduite 41 de manière à assurer l'échange précité (ligne 10) dans l'appareil de chauffage 7.

A la partie inférieure (à droite au dessin) se trouvent les moyens 42 pour la récupération du sérum enrichi en protéines, la circulation de la bande 35 se faisant dans le sens de la flèche f4. Ces moyens 42 sont établis sous forme d'un bac récepteur dont une paroi s'étend en vis-à-vis d'une partie substantielle du brin inférieur de la bande filtrante 35. Le liquide concentré en protéines est repris par une pompe 43 et sort en 44.

On a représenté par la référence 45 un groupe de buses à air comprimé qui est monté entre le brin supérieur et le brin inférieur de la bande 35. Les flèches f5 matérialisent les jets d'air qui traversent le brin inférieur en circulation de la bande 35 et permettent le décolmatage de la toile filtrante. Par ailleurs on a représenté schématiquement en 47 une rampe de lavage qui éjecte vers le bas de l'eau qui traverse le brin inférieur de la bande 35 et s'écoule en étant récupérée par le moyen 46. On n'a pas représenté au dessin les dispositifs accessoires qui sont à la portée de l'homme de l'art. Si, ainsi qu'il est préféré, le liquide concentré en protéines est réutilisé en vue d'une production fromagère pour être additionné au lait de départ, il convient de refroidir le liquide sortant en 44 et éventuellement de le soumettre à un traitement d'homogénéisation ou de lissage avant l'introduction en fabrication fromagère.

Il va sans dire également que l'installation peut comporter des appareillages différents pour réaliser respectivement le chambrage dynamique et le chambrage statique.

14

## REVENDICATIONS

1. Procédé pour la récupération des protéines contenues dans le lactosérum, par traitement thermique et/ou acidification de celui-ci, puis séparation des protéines floculées, ledit procédé étant caractérisé en ce que, après le traitement thermique, on réalise un chambrage dans des conditions dynamiques ayant pour fonction de dénaturer les protéines en différant la formation d'un floculat, en ce que, à la suite de ce chambrage, on traite de manière connue le sérum pour lui conférer un pH acide afin de former des flocons, en ce qu'on réalise sur ce sérum un chambrage dans des conditions statiques, dans lesquelles les flocons ne sont pratiquement pas mis en mouvement, en ce que, après ce chambrage statique, on fait écouler en continu sous l'effet de la gravité le sérum floculé jusque dans une zone de réception où les flocons conservent pratiquement leur intégrité et de laquelle s'écoule le sérum floculé dans des conditions douces jusqu'à une zone de filtration en continu à partir de laquelle on sépare un produit concentré en protéines sériques et un liquide de filtration appauvri en protéines.

2. Procédé selon la revendication 1, caractérisé en ce que le pH du sérum de départ est ajusté par des moyens connus, dans la gamme de 4,5 à 11, par addition d'un composé basique tel qu'un carbonate ou hydroxyde alcalin ou alcalino-terreux, l'hydroxyde de sodium étant préféré.

3. Procédé selon l'une des revendications 1 ou 2, caractérisé en ce que, au cours du traitement thermique, le sérum est chauffé à une température de 72 à 98°C environ, l'intervalle préféré se situant entre 80 et 85°C.

4. Procédé selon l'une quelconque des revendications 1 à 3, caractérisé en ce que le chambrage dans des conditions dynamiques implique un temps de séjour de l'ordre de 10 à 30 minutes et par exemple 20 minutes dans une zone dans laquelle le sérum est soumis à une circulation guidée propre à assurer à la fois le mouvement dynamique et l'homogénéisation du produit.

5. Procédé selon l'une quelconque des revendications 1 à 4, caractérisé en ce que, après le chambrage dynamique, le sérum est acidifié à un pH compris entre 4,2 et 6,4 environ, de préférence entre 5,4 et 5,8 environ, l'acidification étant réalisée à l'aide d'un acide inorganique ou organique accepté sur le plan alimentaire, tel que l'acide chlorhydrique, l'acide nitrique ou l'acide lactique, l'acide chlorhydrique étant préféré.

6. Procédé selon l'une quelconque des revendications 1 à 5, caractérisé en ce que le sérum floculé, après son acidification, subit un chambrage statique en étant maintenu pendant une période de 5 à 30 minutes, par exemple de 10 à 15 minutes, dans une zone dans laquelle les flocons ne sont pratiquement pas mis en mouvement.

7. Procédé selon l'une quelconque des revendications 1 à 6, caractérisé en ce que la zone de réception située au-dessous de la zone de chambrage statique, est constituée d'une simple colonne à partir de laquelle le sérum floculé s'écoule par débordement jusque dans la zone de filtration adjacente.

8. Installation pour la mise en oeuvre du procédé selon l'une quelconque des revendications 1 à 7, ladite installation comprend un appareil (7) pour le chauffage du sérum de départ, des moyens d'ajustement du pH avant et après chauffage du sérum et un ensemble (34) de filtration, ladite installation étant caractérisée en ce qu'elle comprend un dispositif (14, 15) de chambrage dynamique disposé après l'appareil de chauffage (7), une unité (22) de chambrage statique disposée aussitôt après les moyens (20) d'ajustement du pH et au-dessus de l'ensemble de filtration (34) et un récipient (33) recevant par gravité le produit soutiré dans l'unité (22) de chambrage statique, ledit récipient (33) étant disposé au-dessous de ladite unité (22) dans une position adjacente à l'ensemble de filtration (34).

9. Installation selon la revendication 8, caractérisée en ce que le dispositif (14, 15) de chambrage dynamique comporte au moins une cuve verticale (14, 15) dans laquelle est monté un organe axial fixe (17,18) destiné à assurer une circulation guidée du sérum, ledit organe étant de préférence une vis hélicoïdale.

10. Installation selon l'une des revendications 8 ou 9, caractérisée en ce que l'unité (22) de chambrage statique comporte une batterie de cuves, en particulier de trois cuves (23, 24, 25) dont le remplissage en sérum acidifié, le chambrage et la vidange sont exécutés en un cycle permettant de travailler en continu.

11. Installation selon l'une quelconque des revendications 8 à 10, caractérisée en ce que le récipient (33) est une colonne, alimentée à sa partie inférieure en sérum floculé (32) provenant de l'unité (22) de chambrage statique, le contenu de la colonne (33) s'écoulant à sa partie supérieure (flèche $f_3$), par simple débordement sur l'ensemble de filtration (34).

12. Installation selon l'une quelconque des revendications 8 à 11, caractérisée en ce que l'ensemble (34) de filtration comprend une toile(ou bande) filtrante (35), circulant sur deux tambours d'extrémité (36, 37) ladite bande présentant des bords latéraux relevés, de contexture élastique, permettant le passage sur les tambours.

13. Installation selon la revendication 12, caractérisée en ce que le toile de filtration (35) présente une dimension de mailles comprise entre 30 et 100 microns environ.

14. Installation selon l'une des revendications 12 Ou 13, caractérisée en ce que le sérum floculé déversé de la colonne (33) se dépose sur le brin supérieur de la bande (35), sous forme d'un lit de filtration (38), et en ce que des moyens (42) disposés en vis-à-vis du brin inférieur de la bande (35) sont prévus pour la récupération du liquide (44) enrichi en protéines, tandis que le liquide de filtration (39) appauvri en protéines est soutiré en pouvant être utilisé en vue d'un échange (10) avec le sérum de départ.

17

15. Installation selon l'une quelconque des revendications 12 à 14, caractérisée en ce que l'ensemble (34) de filtration comprend un groupe (45) de buses à air comprimé permettant le décolmatage du brin inférieur de la toile filtrante en vis-à-vis des moyens (42).

16. Installation selon l'une quelconque des revendications 12 à 15, caractérisée en ce que, après le groupe (45) de buses à air comprimé, en considérant le sens de circulation de la bande filtrante (35), est montée une rampe (47) de lavage qui parachève le nettoyage du brin inférieur de la bande (35).

17. Produit liquide enrichi en protéines, consistant en un lait de protéines sériques titrant 20 à 50 g / l de protéines, par exemple 30 à 32 g/l, lesdites protéines se trouvant à l'état coagulé.

18. Application du produit selon la revendication 17, dans la production laitière, le lait de protéines étant additionné au lait de fabrication destiné à la transformation en fromage.

1/1